# EUROPEAN PATENT APPLICATION

(11) **EP 4 765 046 A1**
(43) Date of publication of application: **24.06.2026**
(21) Application number: 25223735.9
(22) Date of filing: 16.12.2025
(51) Int. Cl.: G06V 20/13, G06V 20/17, G06V 10/32, G06V 10/82, G06V 20/10, G06V 20/52, G06V 20/70

(54) **METHODS AND SYSTEMS FOR USE IN FEATURE-SPECIFIC CHANGE DETECTION FOR IMAGERY**

(30) Priority: 17.12.2024 US 202418983910
(71) Applicant: Vantor Inc., Westminster, CO 80234 (US)
(72) Inventor: Stackpole, Matt, Westminster, 80234 (US); Ng, Stephen, Westminster, 80234 (US); Svejkosky, Joseph, Westminster, 80234 (US)
(74) Representative: ARC-IP

(57) **Abstract**

Systems and methods for detecting changes in features, based on images of geographic regions of interest. One example computer-implemented method includes accessing, by a computing device, a plurality of images of a region of interest (ROI) and compiling, by the computing device, a temporal stack of images, which includes the plurality of images of the ROI arranged in temporal order over a period of time. The computer-implemented method also includes classifying, by the computing device, using semantic segmentation, pixels of each of the plurality of images into one of multiple feature classes, to define a segmentation raster, and performing, by the computing device, change point detection change point detection on a temporal stack of the segmentation rasters. The computer-implemented-method further includes identifying, by the computing device, a change in one of the multiple feature classes, based on the change point detection output.

## Description

### FIELD

The present disclosure generally relates to methods and systems for use in change detection, and in particular, for use in detecting change in specific feature classes, through use of temporal stacks of imagery.

### BACKGROUND

This section provides background information related to the present disclosure which is not necessarily prior art.

Geospatial images are known to be captured by various capture devices, such as, for example, satellites, manned aerial vehicles, micro air/aerial vehicles (MAVs), unmanned aerial vehicles (UAVs), etc. The images are known to be analyzed to identify different objects within the images. In particular, for example, change detection in urban settings may focus on building changes, where due to construction, demolition, disaster, etc., buildings change within the urban setting, and detection enables the tracking of such changes. The techniques for change detection, in general and in urban settings, rely on different machine learning models, including deep learning models.

### SUMMARY

This section provides a general summary of the disclosure and is not a comprehensive disclosure of its full scope or all of its features.

Example embodiments of the present disclosure generally relate to methods (e.g., computer-implemented methods, etc.) for use in change detection. In one example embodiment, such a method generally includes: accessing, by a computing device, a plurality of images of a region of interest (ROI); compiling, by the computing device, a temporal stack of images, which includes the plurality of images of the ROI arranged in temporal order over a period of time; classifying, by the computing device, using semantic segmentation, pixels of each of the plurality of images into one of multiple feature classes, to define a segmentation raster; performing, by the computing device, step-function convolution on a temporal stack of the segmentation rasters; and identifying, by the computing device, a change in one of the possibly multiple feature classes, based on the step-function convolution output.

Example embodiments of the present disclosure also relate to non-transitory computer-readable storage media including executable instructions for detecting changes in images, especially related to building changes, etc. In one example embodiment, such a non-transitory computer-readable storage medium includes executable instructions, which when executed by at least one processor, cause the at least one processor to perform the operations of the method described above (and/or one or more of the related operations recited herein). Example embodiments of the present disclosure further relate to systems comprising computing devices configured to perform the operations of the method described above (and/or one or more of the related operations recited herein).

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments, are not all possible implementations, and are not intended to limit the scope of the present disclosure.
FIG. 1 illustrates an example system of the present disclosure configured for detecting changes in specific feature classes in regions of interest, based on temporal stacks of the images of the regions;
FIG. 2A is an example illustration of segmentation of an image including multiple features, such as roads, buildings, and vegetation, as separate image channels/classes;
FIG. 2B is an example illustration of mean-based edge detection, which may be employed in the system of FIG. 1;
FIG. 2C illustrates example rasters based on differences realized from edge detection, per pixel, which may be used in the system of FIG. 1;
FIG. 3 is a block diagram of an example computing device that may be used in the system of FIG. 1; and
FIG. 4 illustrates an example method, which may be used in (or implemented in) the system of FIG. 1, for use in detecting one or more changes in feature classes in a region of interest, based on temporal stacks of the images of the region.

Corresponding reference numerals indicate corresponding parts throughout the several views of the drawings.

### DETAILED DESCRIPTION

Example embodiments will now be described more fully with reference to the accompanying drawings. The description and specific examples included herein are intended for purposes of illustration only and are not intended to limit the scope of the present disclosure.

In connection with change detection in images, ability to detect changes, accurately, is dependent on the specific techniques employed for detection. Conventional techniques rely on machine learning in a manner that determines changes on a per pixel basis *(e.g.,* pixel change by deviation, etc.) from image to image (or year to year), whereby context of the pixel(s) in the image is not considered. By failing to consider context, conventional techniques lack precision in detecting changes, which degrades the usefulness of the detected change. What's more, the conventional techniques lack any insight into timing of the specific changes over a period of time. Further, other conventional techniques that do consider context, such as machine learning models trained to predict changes in a single class, such as structures, tend to only find changes between two images. These techniques are prone to noise due to, among other things, model error.

Uniquely, the systems and methods herein provide a unique process for detecting changes in images, and also timing of the changes, in specific feature classes from a temporal stack of images.

In particular, the present disclosure describes the change detection, through a temporal stack of images, where the images are specific to a region of interest. A change detection platform uses one or more deep learning models to perform semantic segmentation, which can be thought of as pixel-wise classification, of the images in the temporal stack, in order to designate feature classes (e.g., structures, etc.) in the images. The segmentation output includes segmentation rasters, which are combined into a temporal stack of the same. The platform optionally performs non-linear temporal regularization on the image stack to calibrate and denoise the segmentation rasters. The regularization may be based on histogram matching, or temporal denoising. The platform then employs an edge detection to each spatial pixel (along the temporal axis across the stack) to define a change value, which is compiled into a change raster and an index raster. The change raster pixel values indicate change, while the index raster, with values corresponding to the temporal index within the image stack, indicates an approximate date of change of the feature in the images.

In this way, the systems and methods herein incorporate deep learning to leverage context for detecting what is changing, rather than pixel-to-pixel comparison, relative to a deviation. The change detection is therefore improved.

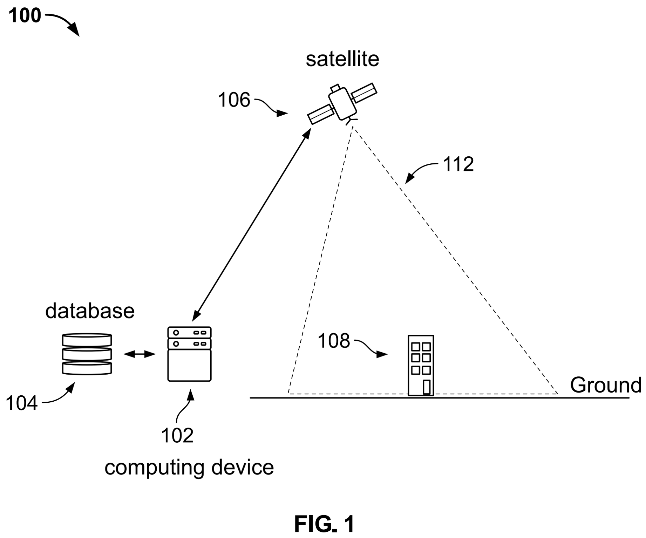

FIG. 1 illustrates an example system 100 in which one or more aspects of the present disclosure may be implemented. Although the system 100 is presented in one arrangement, other embodiments may include the parts of the system 100 (or additional parts) arranged otherwise depending on, for example, sources and/or types of image data, privacy rules and/or regulations, etc.

In the example embodiment of FIG. 1, the system 100 generally includes a platform computing device 102 and a database 104, which is coupled to (and/or is otherwise in communication with) the platform computing device 102, as indicated by the arrowed line. The platform computing device 102 is illustrated as separate from the database 104 in FIG. 1, but it should be appreciated that the database 104 may be included, in whole or in part, in the computing device 102 in other system embodiments.

In addition, the system 100 also includes (and/or is in communication with) satellite 106, which is representative of multiple different satellites orbiting the Earth and configured to capture various images of the surface of the Earth. One example satellite system, which may include the satellite 106, includes the MAXAR constellation of satellites (e.g., QuickBird or WorldView-series satellite constellation, etc.), or other constellation of satellites, such as, for example, the Landsat satellite constellation, the Sentinel-2 satellite constellation, etc. The satellite system(s)/constellation(s) may be configured to capture images of the ground at different resolutions, at one or more different intervals. In this example embodiment, satellite 106 is configured to capture one or more images of the ground, at an interval of once per N days, for example, where N may include one day *(i.e.,* daily), two days, five days, seven days *(i.e.,* weekly), ten days, or other number of days therebetween, or other number of days more than ten days, etc.

In FIG. 1, the satellite 106 is positioned above the ground, which in general, is Earth. The satellite 106, as positioned above the Earth, defines a field of view 112, which includes at least a portion of the ground, as indicated by the dotted shape. The field of view 112, generally, defines the boundaries of images captured by the satellite 106. As shown in FIG. 1, the field of view 112 includes a feature 108, which, in this example, is a structure, or more specifically, a building. It should be understood that the field of view may, and often does, include more than one feature. Consequently, because the field of view 112 includes the feature 108, the image captured by the satellite 106 also includes the feature 108.

The features may include a variety of different types of feature classes, often depending on, for example, a type of the specific geographic setting.

In urban settings, for example, the image may include feature classes such as structures, which may include, more specifically, buildings, stadiums, bridges, dams, etc. In rural settings, the feature classes may include agricultural fields, open spaces, undeveloped land, residences, etc. The feature classes may be classified, in turn, into different feature categories, such as, for example, man-made, natural, etc., where certain features may be included in multiple different categories or classes. The feature classes herein may be broadly indicative of or related to any different type of land use or land cover classification.

Referring again to FIG. 1, after the image(s) are captured, the satellite 106 is configured to transmit the images, directly or indirectly, to the database 104, which is located on Earth (or on the ground). The images may be transmitted, as each is captured, or the images may be transmitted at one or more intervals, singularly or in batches, etc. The images are then stored in the database 104 and made available to the computing device 102. In this example embodiment, the satellite 106 is configured to capture hundreds or thousands of images, during various intervals, and which include one or multiple different geographic locations. As such, for the satellite 106, which again may be representative of multiple satellites, the database 104 includes thousands, hundreds of thousands, millions, tens of millions, etc., images of various locations across the Earth.

While satellite 106 is included in the system 100, it should be appreciated that other image capture devices may be used in other system embodiments, including, for example, unmanned aerial vehicles (UAVs) *(e.g.,* inside the atmosphere) *(e.g.,* drones, etc.), manned aerial vehicles, or micro air/aerial vehicles (MAVs), or other devices sufficiently positioned to capture images of various geospatial locations singularly, or repeatedly over various intervals.

In general, it should be understood that the images referred to herein may include any remote sensing image of the geographic location.

In addition to the above, it should be understood that over time, whether over limited time *(e.g.,* days, weeks, months, etc.), or over extended periods of times *(e.g.,* years, decades, etc.), the geographic location(s) change. The changes may be due to development of an undeveloped area, or changes in types of developments, etc. For example, a new subdivision may be constructed in a former agricultural field, or a multi-story office complex may be constructed in a formerly suburban residential area, or additional floors or structures may be added onto existing structures, etc. Conversely, buildings may be demolished due to safety concerns, or to make way for new buildings, etc. Also, buildings may be destroyed through destructive forces or natural disasters, etc. Regardless of the reasons, existing features within the geographical location(s) or region(s) of interest (ROI) may change at various intervals (e.g., construction changes may be less rapid than destruction changes, etc.).

In connection with the above, the platform computing device 102 is configured to detect the changes in the ROI, and specifically, features therein, through analysis of images specific thereto. That said, it should be understood that the features of classification may define what changes are detected, whereby a feature may be specific to existence or non-existence of that feature, or a characteristic of that feature, etc.

Initially, the platform computing device 102 is configured to access images from the database 104 and then to compile a stack of images for a ROI, where the images extend over an interval. That is, a temporal stack of images is compiled. The images may include all available images for the ROI, which are then compiled, in temporal order (e.g., from most recent to least recent, etc.), with temporal data associated therewith. In general, in example embodiments, the stack of images may include between five and two hundred images, between five and fifty images, between ten and thirty images, or between ten and twenty images (or more or less), etc. *(e.g.,* with images on a daily, weekly, bi-weekly, monthly, etc., basis (or more of less), etc.), where the number of images and the density of images may be based on a period in which the changes is to be detected, the type of change (e.g., relatively slow change, etc.), noise in the segmentation model, etc. Additionally, or alternatively, the platform computing device 102 may be configured to access only certain images, at certain intervals. That is, for example, the images may be limited to weekly images, or other periodic intervals, for the ROI. And, in other examples, the platform computing device 102 may be configured to limit the images based on a specific resolution, or provided from a specific source, or with certain desirable characteristics like limited cloud-cover, etc.

The temporal stack of images may include multiple months, one year, two years, or multiple years of images, etc., with the overall period of the stack of images potentially depending on the type of change detection, available images, etc. The density of the images may be about 25-300 images, or 50-200 images, or 100 images (or values therebetween), per year for the ROI, but other densities of images in the stack may be implemented in other embodiments.

Regardless, after the temporal stack of images is defined, the platform computing device 102 is configured to perform semantic segmentation on each of the images in the stack, whereby each image is converted to a segmentation raster.

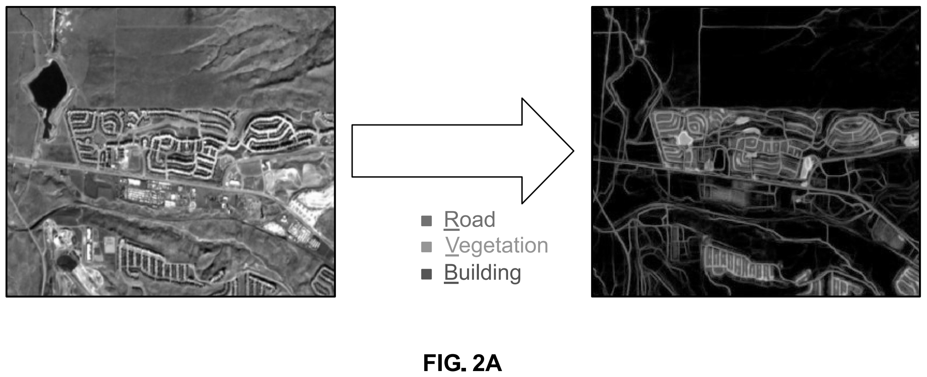

The sematic segmentation may be provided by use of a deep learning model to classify pixels included in the images based on semantic features, such as, for example, color, placement, etc. The segmentation is directed, specifically, to the feature classes included in the images. FIG. 2A illustrates an example semantic segmentation, in which the pixels of an example image are segmented or classified into three feature classes in separate bands: road, vegetation, and building (each indicated by different shading in FIG. 2A). As shown, the original image is on the left, and the segmentation raster is on the right. In connection therewith, the deep learning model is trained, by the platform computing device 102 or otherwise, based on a training dataset in which original images and associated labeled images, which include designation for the roads, vegetation and buildings included in the original images. The training dataset is used to train the encoder and decoder of the deep learning model, for example, based on a CNN architecture, whereby the hyperparameters are set and the deep learning model is trained. In connection therewith, the optimal values for the model parameters and filter weights of the convolution layers are defined. In this way, the deep learning model is configured to classify new images into the feature classes upon which the model was trained.

The output from the deep learning model, when applied to a new image, is then a raster with values correlating to a probability of each pixel being within that feature class or classes. For example, a pixel, which includes a road, may include a segmentation value of 0.8 for the road feature class, but also may include a segmentation value of 0.5 for the building feature class and 0.1 for the vegetation feature class. An example pixel is shown in a midshading, as designated in the key in FIG. 2A as the pixel is most likely a road, but the segmentation rasters for road, building and vegetation include the respective independent segmentation values (from the deep learning model) for the pixel. As such, each pixel is either designed as one of the classes, based on the segmentation values (as represented by the different shadings in FIG. 2A), or none of the classes, which is the darkest shading (or black) in FIG. 2A.

That being said, it should be understood that the feature classes of the images are not limited to roads, vegetation and buildings, as other (or different) feature classes may be included for one or more reasons in other examples, and any subset of these feature classes may also be used. Also, it should be understood that other types and/or techniques of segmentation may be employed in other embodiments.

The platform computing device 102 is configured to compile the segmentation rasters into a temporal segmentation stack consistent with the temporal stack of images. In particular, in this embodiment, each segmentation raster includes a length and a width of the ROI, and then for each feature class, the segmentation raster includes model output values for the feature class(es) (e.g., building, road, vegetation) to form one layer of the segmentation stack *(i.e.,* a three-dimensional array). The resulting temporal segmentation stack then is a 4-dimensional array of size N x C x H x W, where N corresponds to the number of images in the stack over time, C corresponds to the number of feature classes inferred with the segmentation operation, and H and W are the height and width, respectively, of the images, which are the same for all images. That is, there is one "layer" for each image in the original stack of images. It should be understood that the segmentation rasters are separated by feature class, whereby the segmentation raster from FIG. 2A includes three separate bands, one for each of buildings, roads, and vegetation, with the corresponding model output value (or segmentation value) for each feature class included therein. In addition, by being a stack of images from different acquisition times, the segmentation stack has a fourth dimension which may be considered as corresponding to time.

Next, the platform computing device 102 is configured to perform non-linear temporal regularization of the segmentation stack, in the temporal direction, in order to calibrate the segmentation values from the deep learning model and, potentially, to further remove outlier responses through denoising.

In this example embodiment, for instance, the platform computing device 102 is configured to perform rolling window temporal median filter denoising and then histogram matching regularization. This denoising/regularization operation functionally takes as input a raw segmentation stack and returns a regularized segmentation stack with reduced noise.

As it relates to rolling window temporal median filter denoising, the platform computing device 102 is configured to a denoised the segmentation stack whereby for each pixel in the segmentation image stack, a rolling window median filter is applied in the temporal direction. That is, for each pixel in the time dimension (or pixel of interest), the value is replaced by the median value from the time dimension using a local neighborhood of pixel values in the segmentation stack. This neighborhood may include spatial neighbors in addition to the temporal neighbors. The neighborhood may include three, five, seven, etc., pixels in the temporal direction centered on the pixel of interest (or not centered relative to the pixel of interest (e.g., two pixels prior in the temporal direction, and three pixels later in the temporal direction, etc.)), and additional spatial pixels, as desired. The sliding median value, in this example embodiment, removes high frequency noise from the segmentation stack.

As it relates to histogram matching, the platform computing device 102 is configured to generate a single temporal median segmentation image from the segmentation image stack, whereas each segmentation image stack represents a single target class of interest. That is, for each pixel in the segmentation image stack, the median value across all image acquisition times is taken to create a new segmentation image, which represents a single stable distribution of model responses. Next, the platform computing device 102 is configured to determine a histogram of median model response values, whereby the histogram is a time-normalized representation of the class response distribution of the segmentation raster images. Next, the platform computing device 102 is configured to perform histogram matching for each individual segmentation image to the single temporal median image, such that the distribution of model responses across each individual image is more uniform in that the responses are matched to a single median image. The histogram matching, in this example embodiment, may be provided to remove, for example, low frequency noise from the segmentation stack.

The platform computing device 102 is configured to perform histogram matching, as explained above, for each feature class, using the segmentation stack specific to that feature class.

Additionally, or alternatively, the platform computing device 102 may be configured to employ temporal denoising, using a 1-dimensional Markov Random Field (MRF) model, which leverages pixel level context of the images. In particular, the platform computing device 102 is configured to model a column of pixels in the temporal direction as a ferromagnetic Ising model (e.g., particular type of MRF, etc.) and to compute, based thereon, the single-site conditional probabilities using a technique known as belief propagation.

After regularization, the platform computing device 102 is configured to perform change point, or one-dimensional edge detection, which includes, in this example, a convolution operation, such as, for example, a temporal *Sobel* filter, etc., along the temporal axis to evaluate intensity deviations at all possible dates of change for each pixel. In particular, the platform computing device 102 is configured, for each pixel in the regularized segmentation stack of images along a temporal axis of the stack *(i.e.,* the same spatial pixel in each of the images of the stack over time), for each class, to determine for spatial pixels, for a given window in time, a weighted mean value for each adjacent window in time. The platform computing device 102 is configured to then determine the difference between the weighted mean in one adjacent window to the other adjacent window (on either side of the pixel), which is characterized in the field of image processing as a time-domain step filter, *Sobel* filter, high-pass filter, or generally, edge-detector. This time-domain convolution operation results in a new stack of filter responses whereby there exists a time-series of filter responses for each spatial pixel.

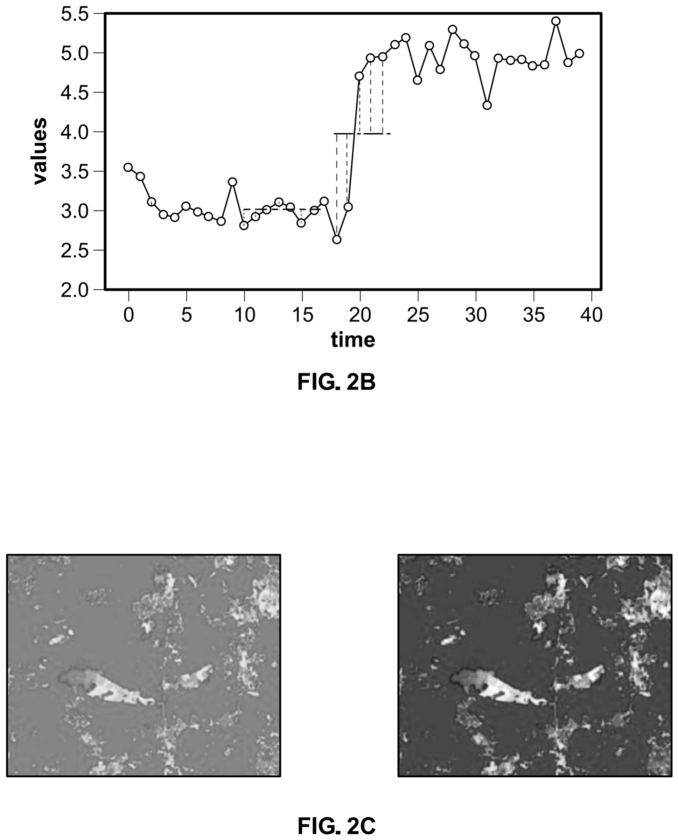

The platform computing device 102 is configured to incrementally repeat for the period of the regularized segmentation stack, as shown in FIG. 2B, for example, and also repeat for each other pixel in the stack of regularized segmentation rasters, and also repeat for each feature class. As apparent from the graphical representation of the difference, or change value, when there is a change in what is depicted in the pixel, it is apparent.

Next, the platform computing device 102 is configured to identify a change and the time frame of the change, by taking the minimum or maximum values of the time-domain-dimension of the convolution filter outputs for each spatial pixel. In particular, in this example, the platform computing device 102 is configured to construct a first raster indicative of change as the maximum and/or minimum value of the convolution output at each spatial pixel, whereby the maximum or minimum operator is used for establishing a likelihood of either increasing or decreasing detection probability for each segmentation class. For each spatial pixel, the index of the maximum or minimum of the convolution filter response stack is included in a second raster as an indicator of the most likely date of change for each pixel. The pixel intensities in the change raster, *i.e.,* the change values from the step-function convolution, are considered proportional to change certainty. The maximum value is shown in the image of FIG. 2C, where the left image indicates, for each spatial pixel, the maximum value of the convolution filter time-domain response used as a certainty metric or magnitude of change signal (darker is less likely change, lighter is more likely change), and then the right image is an index of the change in the stack, whereby, as shown, the index associated with the change from the left is an indication of the time at which the change occurred *(i.e.,* red (or a first shading, etc.) is one time window or image of the stack, while blue (or a second shading, etc.) is another time window or image of the stack.

It should be understood that while only the segmentation values of one class, per pixel, is considered at one time in the edge detection above, that the edge detection may be applied to a vector of multiple classes, per pixel, at one time in other embodiments. In such embodiments, for example, the pixel may be represented for each image as a vector of the multiple regularized, segmentation values. The difference may then be calculated as a difference between adjacent vectors or the difference of aggregated vector(s) of adjacent windows, etc.

That said, in this example embodiment, the platform computing device 102 may be further configured to identify the specific change, based on classes. For example, where the maximum change value is in the building class, the platform computing device 102 is configured to determine a maximum value of the pixel prior to the change, which may be vegetation, for example. By considering multiple classes in assessing the change detected, the platform computing device 102 is configured to further identity content of the change between classes (e.g., change from vegetation to building, etc.), or between a class and no class, etc.

The change detection, in this way, permits the platform computing device 102 to detect change and a temporal indicator of the change and potentially content. Based on the maximum change in the *Sobel* filter, relative to one or more thresholds, the platform computing device 102 is configured to then output data indicative of the change.

In connection with the above, in various examples, the platform computing device 102 may be configured to use the detected change to impose change-driven tasks. For example, the platform computing device 102 may be configured to respond to the change, by directing the satellite 106 to the location of the detected change to capture additional, or new images of the ROI whereby more accurate and up-to-date images for the ROI are maintained automatically. The platform computing device 102 may further be configured to associate different detected changes by location, whereby the satellite 106 may be directed, through a queue, whereby ROIs with a highest number of detected changes are prioritized over ROIs with few changes. Apart from specific direction of the satellite 106, the ROIs having changes may be denoted in one way or another, in a data structure, which is then used, as a data point, in directing tasks. For example, tasks related to updating road network maps, for example, may include directing updates for basemaps through concentrations of changes in roads to prioritize areas having more changes over areas with fewer changes. In other examples, the detected changes may be leveraged to aid in disaster relief, for example, where changes in infrastructure for telecommunications helps to identify where to deploy resources to repair and restore services, etc., or to resource harvesting, etc. In still other examples, change detection may be leveraged to ensure regulatory compliance, for instance, with regard to new/modified structures (e.g., new buildings, schools, pipelines, etc.), as such new/modified structures may impact overall regulatory compliance (e.g., maximum/minimum distance regulations, etc.), etc. Accurate detection of changes provides advanced insights, as compared to conventional techniques.

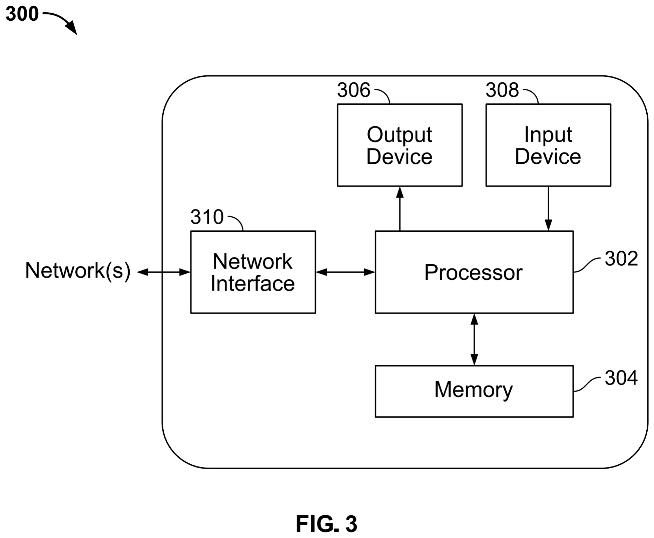

FIG. 3 illustrates an example computing device 300 that may be used in the system 100 of FIG. 1. The computing device 300 may include, for example, one or more servers, workstations, personal computers, laptops, tablets, smartphones, virtual devices, etc. In addition, the computing device 300 may include a single computing device, or it may include multiple computing devices located in close proximity or distributed over a geographic region, so long as the computing devices are specifically configured to operate as described herein. What's more, it should further be appreciated that the computing device may be configured consistent with and/or implemented as one or more cloud, fog, and/or mist computing architectures.

In the example embodiment of FIG. 1, the computing device 102, the database 104, and the satellite 106 may include and/or be implemented in one or more computing devices consistent with computing device 300. The database 104 may also be understood to include and/or be implemented in one or more computing devices, at least partially consistent with the computing device 300. However, the system 100 should not be considered to be limited to the computing device 300, as described below, as different computing devices and/or arrangements of computing devices may be used. In addition, different components and/or arrangements of components may be used in other computing devices.

As shown in FIG. 3, the example computing device 300 includes a processor 302 and a memory 304 coupled to (and in communication with) the processor 302. The processor 302 may include one or more processing units *(e.g.,* in a multi-core configuration, etc.). For example, the processor 302 may include, without limitation, a central processing unit (CPU), a microcontroller, a reduced instruction set computer (RISC) processor, a graphics processing unit (GPU), an application specific integrated circuit (ASIC), a programmable logic device (PLD), a gate array, and/or any other circuit or processor capable of the functions described herein.

The memory 304, as described herein, is one or more devices that permit data, instructions, etc., to be stored therein and retrieved therefrom. In connection therewith, the memory 304 may include one or more computer-readable storage media, such as, without limitation, dynamic random access memory (DRAM), static random access memory (SRAM), read only memory (ROM), erasable programmable read only memory (EPROM), solid state devices, flash drives, CD-ROMs, thumb drives, floppy disks, tapes, hard disks, and/or any other type of volatile or nonvolatile physical or tangible computer-readable media for storing such data, instructions, etc. In particular herein, the memory 304 is configured to store data including, without limitation, images, images stacks, models (e.g., trained, untrained, etc.), segmentation rasters stacks, histograms, and/or other types of data (and/or data structures) suitable for use as described herein.

Furthermore, in various embodiments, computer-executable instructions may be stored in the memory 304 for execution by the processor 302 to cause the processor 302 to perform one or more of the operations described herein *(e.g.,* one or more of the operations of method 400, etc.) in connection with the various different parts of the system 100, such that the memory 304 is a physical, tangible, and non-transitory computer readable storage media. Such instructions often improve the efficiencies and/or performance of the processor 302 that is performing one or more of the various operations herein, whereby such performance may transform the computing device 300 into a special-purpose computing device. It should be appreciated that the memory 304 may include a variety of different memories, each implemented in connection with one or more of the functions or processes described herein.

In the example embodiment, the computing device 300 also includes an output device 306 that is coupled to (and is in communication with) the processor 302 *(e.g.,* a presentation unit, etc.). The output device 306 may output information (e.g., change detection rasters, etc.), visually or otherwise, to a user of the computing device 300. It should be further appreciated that various interfaces (e.g., as defined by network-based applications, websites, etc.) may be displayed or otherwise output at computing device 300, and in particular, at output device 306, to display, present, etc., certain information to the user. The output device 306 may include, without limitation, a liquid crystal display (LCD), a light-emitting diode (LED) display, an organic LED (OLED) display, an "electronic ink" display, speakers, a printer, etc. In some embodiments, the output device 306 may include multiple devices. Additionally, or alternatively, the output device 306 may include printing capability, enabling the computing device 300 to print text, images, and the like, on paper and/or other similar media. In addition, the computing device 300 includes an input device 308 that receives inputs from the user *(i.e.,* user inputs) such as, for example, selections of ROIs, etc. The input device 308 may include a single input device or multiple input devices. The input device 308 is coupled to (and is in communication with) the processor 302 and may include, for example, one or more of a keyboard, a pointing device, a touch sensitive panel, or other suitable user input devices. It should be appreciated that in at least one embodiment the input device 308 may be integrated and/or included with the output device 306 *(e.g.,* a touchscreen display, etc.).

Further, the illustrated computing device 300 also includes a network interface 310 coupled to (and in communication with) the processor 302 and the memory 304. The network interface 310 may include, without limitation, a wired network adapter, a wireless network adapter, a mobile network adapter, or other device capable of communicating to one or more different networks (e.g., one or more of a local area network (LAN), a wide area network (WAN) (e.g., the Internet, etc.), a mobile network, a virtual network, and/or another suitable public and/or private network, etc.), including the network or other suitable network capable of supporting wired and/or wireless communication between the computing device 300 and other computing devices, including with other computing devices used as described herein *(e.g.,* between the computing device 102, the database 104, etc.).

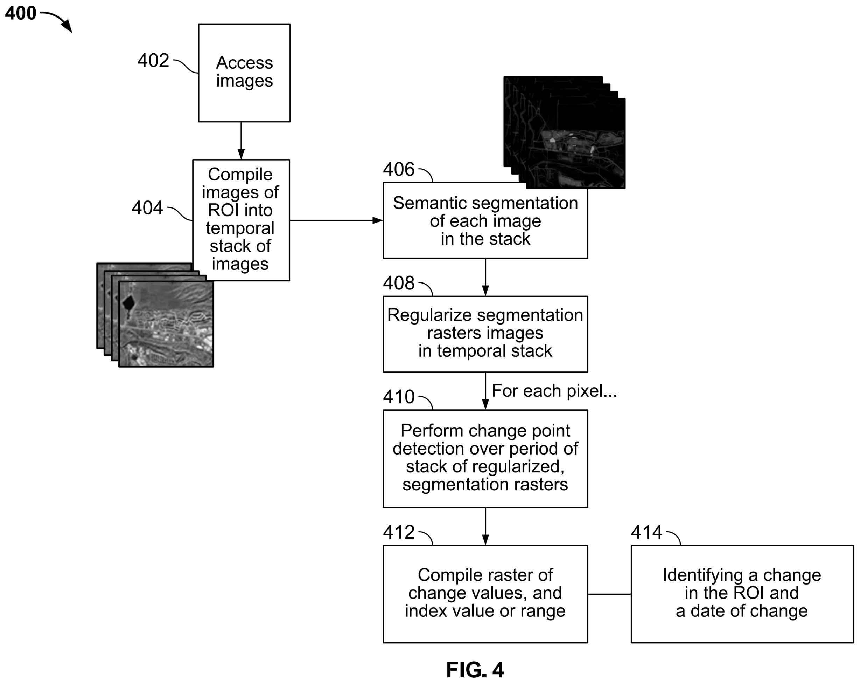

FIG. 4 illustrates an example method 400 for use in detecting changes in images, especially, as to changes in features of the images. The example method 400 is described herein in connection with the system 100, and may be implemented, in whole or in part, in the computing device 102 of the system 100. Further, for purposes of illustration, the example method 400 is also described with reference to the computing device 300 of FIG. 3. However, it should be appreciated that the method 400, or other methods described herein, are not limited to the system 100 or the computing device 300. And, conversely, the systems, models, and the computing devices described herein are not limited to the example method 400.

At the outset, it should be appreciated that the database 104 includes hundreds, thousands, etc., of images of a ROI. The images extend over a period of time, such as, for example, a period of month(s), years(s), etc., with an image taken of the ROI at one or more regular or irregular intervals. For purposes of illustration here, for a ROI, the database 104 includes an image of the ROI, for every five days for two years, for a total of one hundred fort-six images. The ROI is an urban setting, which may include buildings, roads, etc.

Initially, in method 400, the platform computing device 102 access the images for the ROI from the database 104, at 402. The images may be accessed based on a definition of the ROI, or a centroid of the ROI, or otherwise. At 404, the platform computing device 102 compiles the accessed images for the ROI into a temporal stack of images, as shown in FIG. 4. The stack of images is representative of the numerous images included therein. That is, the stack, consistent with the above, includes the one hundred forty-six images, in date order based on date/time which the image was captured *(e.g.,* by the satellite 106, etc.), *i.e.,* as a temporal image stack.

The platform computing device 102 performs, at 406, segmentation on each of the images included in the stack of images. In this example embodiment, a number of classes of features are defined. A deep learning model is then trained based on a training set of images, which includes labels for each of the classes. The classes of features may include, for example, buildings, roads, etc. In general, the change detection is limited to the specific classes of features. As such, to detect a change in a structure, that structure is included in the classes of features. Once trained, the platform computing device 102 segments the images, using the deep learning model, whereby each pixel in the image is segmented into one of the classes. The segmentation rasters (or segment rasters) are then compiled into a stack, as shown in FIG. 4. It should be appreciated that the raster bands are class specific, and include a model output for the specific class. As such, in the example above, the segmentation raster for the road class includes a model output, at each pixel, which is indicative of the probability of that pixel representing a road.

It should be appreciated that due to, in part, the distribution of the images over time, seasonal conditions, and other conditions may impact the segmentation of the pixels.

To address the variance caused by seasonal conditions, or other conditions (where no actual change is present), in this example embodiment, the platform computing device 102 then regularizes, at 408, the segmentation rasters of the stack.

In this example, regularization includes a non-linear temporal regularization, which depends on histograms of the segmentation rasters. That is, the platform computing device 102 inputs the temporal stack of N segmentation rasters, which having a common size height H x width W for each of the class *C (i.e.,* N x H x W x C array). Initially, the platform computing device 102 applies a sliding median filter, in the temporal direction, which replaces the value for a pixel of interest with a median of the pixel and at least one neighboring pixel. The neighboring pixel(s) may include any suitable number of pixels, either balanced or unbalanced relative to a pixel of interest, and any suitable formulation of average including arithmetic, geometric, or harmonic mean or mode. In this way, high frequency noise may be removed, if present. Next, the platform computing device 102 determines the median raster for each class, over the period of the stack, and then determines a histogram of the median raster for the class. The platform computing device 102, in this example, then applies histogram matching to stretch the value of each raster in the temporal stack so its histogram of the raster matches the median raster histogram. In this way, low frequency noise may be removed, if present.

At 410, the platform computing device 102 performs a change point detection over the temporal dimension of the stack. In this example embodiment, the platform computing device 102 performs a 1-dimension convolution of the pixel values in the segmented, regularized stack. That is, in this example, the platform computing device 102 defines a kernel, which may include multiple images. The kernel moves from the beginning of the period of the stack toward the end of the period of the stack. And as the kernel is moved, the platform computing device 102 calculates a difference of means of adjacent windows to each pixel *(e.g.,* two, three, four, etc., pixel values on either side of the pixel), The difference of means is the output for that pixel, and then the kernel is moved and the calculation of the mean for the kernel is repeated. Upon completion, the pixel is represented by an array of output values (e.g., as shown, for example, in graphical form in FIG. 2B, etc.). This is repeated for each pixel in the stack.

Next, at 412, the platform computing device 102 compiles rasters for the stack. The first raster includes a maximum change or a minimum change value (indicating an emergence of a feature class if a positive value or disappearance if a negative value), for the pixel in the array for each pixel. The second raster includes an index, which indicates, generally, an index corresponding to timing at which the maximum/minimum value occurs.

Based thereon, the platform computing device 102 identifies, at 414, a change in the ROI and a date of the change, based on the rasters. In particular, the platform computing device 102 applies one or more filters to the change raster to distinguish changed pixels from unchanged pixels in the ROI. The filter(s) may include, for example, aggregating changed pixels to a lower resolution representation (e.g., a courser grid, etc.), whereby changes are more apparent. In another example, the filter(s) may include one or more thresholds, which may identify and/or remove low-confidence changes, etc. The threshold may be based on, for example, global static variables, or local area statistics, to resolve the actual changes in the ROI. In yet another example, the filter(s) may relate to a limited one or more dates, or date ranges, etc. The platform computing device 102 also identifies, from the corresponding location in the second raster, the corresponding index to determine a date of the change of the corresponding change.

In view of the above, the systems and methods herein provide for enhanced change detection in image processing. Specifically, the use of the deep learning model provides for contextual consideration in change detection. The model is applied over a stack of temporally arranged images, and then analysis extends in the temporal direction to more accurately assess change, and further to identify a timing of the change within the period of time of the stack of images. In this way, the systems and methods herein rely on added data, through unique, unconventional analysis, provides a specific way to solve the technical problem of accurate detection of change though image processing, and further to identify a timing of the change.

With that said, it should be appreciated that the functions described herein, in some embodiments, may be described in computer executable instructions stored on a computer readable media, and executable by one or more processors. The computer readable media is a non-transitory computer readable media. By way of example, and not limitation, such computer readable media can include RAM, ROM, EEPROM, CD-ROM or other optical disk storage, magnetic disk storage or other magnetic storage device, or any other medium that can be used to carry or store desired program code in the form of instructions or data structures and that can be accessed by a computer. Combinations of the above should also be included within the scope of computer-readable media.

It should also be appreciated that one or more aspects of the present disclosure may transform a general-purpose computing device into a special-purpose computing device when configured to perform one or more of the functions, methods, and/or processes described herein.

As will be appreciated based on the foregoing specification, the above-described embodiments of the disclosure may be implemented using computer programming or engineering techniques, including computer software, firmware, hardware or any combination or subset thereof, wherein the technical effect may be achieved by performing at least one of the following operations: (a) accessing a plurality of images of a region of interest (ROI); (b) compiling a temporal stack of images, which includes the plurality of images of the ROI arranged in temporal order over a period of time; (c) classifying, using semantic segmentation, pixels of each of the plurality of images into one of multiple feature classes, to define a segmentation raster; (d) performing step-function convolution on a temporal stack of the segmentation rasters; and/or (e) identifying a change in one of the multiple feature classes, based on the step-function convolution output.

Examples and embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail. In addition, advantages and improvements that may be achieved with one or more example embodiments disclosed herein may provide all or none of the above mentioned advantages and improvements and still fall within the scope of the present disclosure.

Specific values disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may also be suitable for the given parameter (*i.e.,* the disclosure of a first value and a second value for a given parameter can be interpreted as disclosing that any value between the first and second values could also be employed for the given parameter). For example, if Parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if parameter X is exemplified herein to have values in the range of 1 - 10, or 2 - 9, or 3 - 8, it is also envisioned that Parameter X may have other ranges of values including 1 - 9, 1 - 8, 1 - 3, 1 - 2, 2 - 10, 2 - 8, 2 - 3, 3 - 10, and 3 - 9.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When a feature is referred to as being "on," "engaged to," "connected to," "coupled to," "associated with," "in communication with," or "included with" another element or layer, it may be directly on, engaged, connected or coupled to, or associated or in communication or included with the other feature, or intervening features may be present. As used herein, the term "and/or" and the phrase "at least one of" includes any and all combinations of one or more of the associated listed items.

Although the terms first, second, third, etc. may be used herein to describe various features, these features should not be limited by these terms. These terms may be only used to distinguish one feature from another. Terms such as "first," "second," and other numerical terms when used herein do not imply a sequence or order unless clearly indicated by the context. Thus, a first feature discussed herein could be termed a second feature without departing from the teachings of the example embodiments.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for use in change detection, the method comprising:
accessing, by a computing device, a plurality of images of a region of interest (ROI);
compiling, by the computing device, a temporal stack of images, which includes the plurality of images of the ROI arranged in temporal order over a period of time;
classifying, by the computing device, using semantic segmentation, pixels of each of the plurality of images into one of multiple feature classes, to define a segmentation raster;
performing, by the computing device, change point detection on a temporal stack of the segmentation rasters; and
identifying, by the computing device, a change in one of the multiple feature classes, based on the step-function convolution output.

2. The computer-implemented method of claim 1 further **characterized by** one or more of the following features:
- wherein the semantic segmentation is based on a deep learning model, trained based on the multiple feature classes- wherein the multiple features classes include man-made structures.

3. The computer-implemented method of claim 1, further comprising performing a non-linear regularization on the stack of segmentation rasters, prior to performing the change point detection; and
wherein the change point detection includes step-function convolution,
and possibly wherein the non-linear regularization is based on histograms of the multiple feature classes across the period of time of the stack of segmentation rasters,
and/or possibly wherein the non-linear regularization is based on temporal denoising, using a one-dimensional Markov Random field (MRF) model.

4. The computer-implemented method of claim 1, wherein performing the step-function convolution includes:
for each of a plurality of the pixels in the stack of segmentation rasters along the temporal axis of the period of time, determining a mean of two adjacent windows and calculating a change value as a difference of the means.

5. The computer-implemented method of claim 4, further comprising:
compiling a first raster of the maximum change values for each pixel in the stack of segmentation rasters; and
compiling a second raster of index value indicative of a date of the maximum change values in the first raster.

6. The computer-implemented method of claim 5, wherein identifying the change in the one of the multiple features classes is based on the first raster and the second raster.

7. A non-transitory computer-readable storage medium including executable instructions, which when executed by at least one processor in connection with change detection, cause the at least one processor to:
access a plurality of images of a region of interest (ROI);
compile a temporal stack of images, which includes the plurality of images of the ROI arranged in temporal order over a period of time;
classify, using semantic segmentation, pixels of each of the plurality of images into one of multiple feature classes, to define a segmentation raster;
perform change point detection on a temporal stack of the segmentation rasters; and
identify a change in one of the multiple feature classes, based on the step-function convolution output.

8. The non-transitory computer-readable storage medium of claim 7 further **characterized by** one or more of the following features:
- wherein the semantic segmentation is based on a deep learning model, trained based on the multiple feature classes,
- wherein the multiple features classes include man-made structures.

9. The non-transitory computer-readable storage medium of claim 7, wherein the executable instructions, when executed by the at least one processor, further cause the at least one processor to perform a non-linear regularization on the stack of segmentation rasters, prior to performing the change point detection; and
wherein the change point detection includes step-function convolution,
and possibly wherein the non-linear regularization is based on histograms of the multiple feature classes across the period of time of the stack of segmentation rasters,
and/or possibly, wherein the non-linear regularization is based on temporal denoising, using a one-dimensional Markov Random field (MRF) model.

10. The non-transitory computer-readable storage medium of claim 7, wherein the executable instructions, when executed by the at least one processor to perform the step-function convolution, cause the at least one processor to:
for each of a plurality of the pixels in the stack of segmentation rasters along the temporal axis of the period of time, determine a mean of two adjacent windows and calculating a change value as a difference of the means.

11. The non-transitory computer-readable storage medium of claim 10, wherein the executable instructions, when executed by the at least one processor, further cause the at least one processor to:
compile a first raster of the maximum change values for each pixel in the stack of segmentation rasters; and
compile a second raster of index value indicative of a date of the maximum change values in the first raster.

12. The non-transitory computer-readable storage medium of claim 11, wherein the executable instructions, when executed by the at least one processor to identify the change in the one of the multiple features classes, cause the at least one processor to identify the change in the one of the multiple features classes based on the first raster and the second raster.

13. A system for use in change detection, the system comprising at least one computing device configured to:
access a plurality of images of a region of interest (ROI);
compile a temporal stack of images, which includes the plurality of images of the ROI arranged in temporal order over a period of time;
classify, using semantic segmentation, pixels of each of the plurality of images into one of multiple feature classes, to define a segmentation raster;
perform step-function convolution on a temporal stack of the segmentation rasters; and
identify a change in one of the multiple feature classes, based on the step-function convolution output.

14. The system of claim 13, wherein the semantic segmentation is based on a deep learning model, trained based on the multiple feature classes, and wherein the multiple features classes include man-made structures.
